Europäisches Patentamt

European Patent Office

Office européen des brevets

(19)

(11) Veröffentlichungsnummer : **0 095 793**
**B1**

(12) # EUROPÄISCHE PATENTSCHRIFT

(45) Veröffentlichungstag der Patentschrift :
**18.09.85**

(51) Int. Cl.⁴ : **C 21 C   5/52, F 27 D  13/00**

(21) Anmeldenummer : **83200554.0**

(22) Anmeldetag : **19.04.83**

(54) **Verfahren zum Vorwärmen des Einsatzgutes für einen Lichtbogenofen.**

(30) Priorität : **17.05.82 CH 3048/82**

(43) Veröffentlichungstag der Anmeldung :
**07.12.83 Patentblatt 83/49**

(45) Bekanntmachung des Hinweises auf die Patenterteilung : **18.09.85 Patentblatt 85/38**

(84) Benannte Vertragsstaaten :
**AT CH DE FR GB IT LI SE**

(56) Entgegenhaltungen :
**DE-A- 1 921 443**
**DE-A- 2 226 857**
**US-A- 1 739 278**
**US-A- 3 447 920**
**US-A- 3 912 501**

(73) Patentinhaber : **BBC Aktiengesellschaft Brown, Boveri & Cie.**
**Haselstrasse**
**CH-5401 Baden (CH)**

(72) Erfinder : **Bühler, Karl**
**Oberdorfstrasse 28**
**CH-5415 Nussbaumen (CH)**
Erfinder : **Habert, Dietrich**
**Im Hasel 6**
**CH-5422 Oberehrendingen (CH)**

## Beschreibung

Die Erfindung bezieht sich auf ein Verfahren zum Vorwärmen des Einsatzgutes eines Lichtbogenofens durch die Abgase des Lichtbogenofens, welche Abgase aus dem Inneren des Lichtbogenofens wenigstens in eine zur waagrechten Ebene geneigten, um die eigene Achse drehende Fördertrommel geleitet werden, wobei das Einsatzgut in Gegenrichtung zum Abgasstrom durch die Fördertrommel transportiert und erwärmt wird.

Ein derartiges Verfahren ist z. B. aus der Druckschrift Nr. CH-IW 511 090 D der Brown, Boveri & Cie, Baden/Schweiz mit dem Titel « Das BBC/Brusa-Verfahren ; Ein Beitrag zur wirtschaftlichen Stahlherstellung im Lichtbogenofen », bekannt (vgl. : « Stahl u. Eisen », 95 (1975) s. 16-23).

Die Anforderungen, welche bei der Erzeugung von Elektrostahl im Edelstahl- und im Massenstahlsektor sowohl an die Herstellungsverfahren als auch an die elektrischen Schmelzöfen und Zusatzeinrichtungen gestellt werden, sind im wesentlichen folgende :

— Hohe Produktionsleistung pro Ofeneinheit
— Herstellung qualitativ hochwertiger Stähle
— Kurze Stillstandszeiten
— Geringer Energieverbrauch
— Rationelle Fertigungsabläufe
— Grosse Flexibilität bei der Herstellung unterschiedlicher Stahlsorten und Legierungstypen.

Diesen Forderungen kann aber nur in einem Elektrostahlwerk nachgekommen werden, in dem einerseits die einzelnen Verfahrensschritte vom Zusammenstellen (Gattieren) der einzelnen Chargenkomponenten bis hin zum Abgiessen des fertigen Stahles in optimaler Weise verknüpft sind und in dem andererseits das Einsatzgut in geeigneter Aufbereitung hinsichtlich Stückgrösse, chemischer Gehalte und Vorwärmung in die Schmelzöfen gelangt.

In der oben bezeichneten Druckschrift wird ein Herstellungsverfahren zur Optimierung und Rationalisierung der Elektrostahlerzeugung dargestellt und beschrieben. Gemäss Bild I dieser Publikation wird das Einsatzgut durch die Abgaswärme des Lichtbogenofens erwärmt und kontinuierlich dem Lichtbogenofen zugeleitet. Für die Vorwärmung und Zuführung des Einsatzgutes wird eine geneigte Fördertrommel verwendet, die über eine Oeffnung im Ofendeckel mit dem Ofenraum verbunden ist. Die kontinuierliche Förderung des am oberen Trommelende aufgegebenen Einsatzgutes erfolgt durch eine langsame Rotation der Trommel um ihre Längsachse. Zur weiteren Steigerung der Vorwärmung des Einsatzgutes sind an der unteren Stirnseite der Fördertrommel fremdbeheizte Gas- oder Oelbrenner angeordnet.

Die kontinuierliche Zuführung von vorgewärmtem Einsatzgut direkt in den Schmelzofen gemäss des obengenannten Verfahrens eignet sich in hervorragender Weise für ein Einsatzgut, welches eine gleichmässige und kleinstückige Form aufweist und das aus ein und demselben Material, beispielsweise Eisenschwammpellets, besteht. In den Elektrostahlwerken wird jedoch normalerweise Einsatzgut aus verschiedenen Komponenten und mit zum Teil stark variierender Stückgrösse verwendet. Dieses Einsatzgut ist für eine direkte und kontinuierliche Chargierung in den Schmelzofen ungeeignet, und zwar aus folgendem Grund :

Während vorgewärmte Eisenschwammpellets bei kontinuierlicher Zugabe auf die Oberfläche des flüssigen Stahles im Ofen unmittelbar oder nach einer relativ kurzen Dauer geschmolzen werden, beträgt die Einschmelzzeit des normalerweise verwendeten Einsatzgutes trotz Vorwärmung ein Vielfaches derjenigen von Eisenschwammpellets.

Die Folge davon ist, dass an derjenigen Stelle im Ofengefäss bzw. im flüssigen Metall an welcher das chargierte Einsatzgut auftrifft, sich das Einsatzgut im unaufgeschmolzenen Zustand anhäuft und den Schmelzprozess störend beeinflusst.

Zur Behebung dieses Problems könnte beispielsweise die elektrische Anschlussleistung und damit die Schmelzleistung der Lichtbogenöfen erhöht werden. Dies würde sich jedoch einerseits verteuernd auf die Investitionskosten der Schmelzaggregate auswirken und man sähe sich andererseits mit einem neuen Problem, betreffend die feuerfeste Auskleidung der Ofengefässe konfrontiert. Denn die Ofengefässwände werden in der Einschmelzphase lediglich im Bereich der Anhäufung von noch nicht geschmolzenem Einsatzgut geschützt. Der weitaus grösste Teil der dem Ofeninneren zugewandten Oberfläche der Gefässwände bleibt ungeschützt und wird durch die Lichtbögen thermisch stark belastet, so dass die Gefahr eines frühzeitigen Verschleisses der feuerfesten Auskleidung der Ofengefässwände besteht.

Ausgehend vom vorstehend geschilderten Stand der Technik liegt der Erfindung die Aufgabe zugrunde, ein Verfahren zum Vorwärmen des Einsatzgutes zu schaffen, mit dem unter Ausnützung der Abgaswärme des Lichtbogenofens das Einsatzgut vorgewärmt und in gleichmässiger Verteilung in den Lichtbogenofen chargiert werden kann.

Zur Lösung dieser Aufgabe ist erfindungsgemäss vorgesehen, dass das Einsatzgut nach dem Vorwärmen zwischengespeichert und erst danach geschmolzen wird. Das erfindungsgemässe Verfahren weist folgende Vorteile auf :

— Durch das Chargieren der gesamten ofenfüllenden Menge vorgewärmten Einsatzgutes in gleichmässiger Verteilung in den Lichtbogenofen, werden die Ofenwände wie beim üblichen Verfahren durch das Einsatzgut vor der Strahlung des Lichtbogens geschützt. Dies ermöglicht den Einsatz eines feststehenden, nicht rotierenden Lichtbogenofengefässes sowie das Schmelzen mit hoher Ofenleistung.

— Durch das Einfüllen des vorgewärmten Schrottes in einen Zwischenspeicher wird die ansonsten notwendige enge räumliche Kopplung des Lichtbogenofens mit der drehenden Fördertrommel vermieden (freiere Disposition). Gleichzeitig wird ein grösserer Freiheitsgrad im zeitlichen. Ablauf der Vorgänge Vorwärmen und Schmelzen erreicht.

Gemäss Anspruch 2 wird das erwärmte Einsatzgut in mindestens einem Sammelgefäss zwischengespeichert und danach in den Lichtbogenofen chargiert. Der Vorteil hierbei ist insbesondere darin zu sehen, dass das Zwischenpeichern in einem Sammelgefäss mit einfachen Mitteln vorgenommen werden kann.

Nach Anspruch 3 wird das erwärmte Einsatzgut in mindestens ein weiteres Ofengefäss zwischengespeichert und in diesem geschmolzen.

Auf diese Weise kann das weitere Ofengefäss sowohl zum Schmelzen als auch zum Vorwärmen verwendet werden. Gleichzeitig wird die in den Gefässwänden gespeicherte, vom Schmelzvorgang herrührende Wärme zur Vorwärmung ausgenutzt.

Entsprechend Anspruch 4 wird das zwischengespeicherte Einsatzgut durch die Abgase des Lichtbogenofens weiter erwärmt.

Nach Anspruch 5 wird ein erster Teilstrom der Abgase des Lichtbogenofens durch die Fördertrommel und ein zweiter Teilstrom der Abgase des Lichtbogenofens durch das bereits vorgewärmte Einsatzgut geleitet.

Der Vorteil der Erfindung nach den Ansprüchen 4 und 5 besteht insbesondere darin, dass das bereits in der Fördertrommel vorgewärmte Einsatzgut in der Zwischenspeicherung noch mehr vorgewärmt werden kann. Ausserdem wird durch die Umschüttung des Einsatzgutes von der Fördertrommel in den Zwischenspeicher und durch eine weitere Erwärmung eine möglichst grosse Wärmehomogenität innerhalb des Einsatzgutes erreicht.

Eine Lichtbogenanlage zur Durchführung des Verfahrens nach Anspruch 1 umfasst gemäss Anspruch 6 im wesentlichen ein als Sammelgefäss ausgeführten Zwischenspeicher, der zwischen dem Lichtbogenofen und der Fördertrommel angeordnet ist, wobei Mittel zur Führung mindestens eines Teils der heißen Abgase des Lichtbogenofens über einen Abgasstutzen (11) in die Fördertrommel (16) vorgesehen sind. Der Zwischenspeicher ruht auf einem Trag- und Fahrschemel, welcher mit entsprechenden Rollen bzw. Rädern versehen ist, die auf Schienen abrollen. Der Zwischenspeicher ist um annähernd eine Sammelgefässbreite verfahrbar. Ferner sind Mittel zur Entleerung des Sammelgefässes in das Ofengefäss vorgesehen.

Durch die erfindungsgemässe Anordnung entsprechend Anspruch 6 wird mit einfachen Zusatzeinrichtungen eine Zwischen speicherung mit anschliessender Entleerung in das Ofengefäss ermöglicht.

Bei der Lichtbogenofenanlage nach Anspruch 7 ist als Zwischenspeicher zwischen dem Lichtbogenofen und der Fördertrommel ein weiteres Ofengefäss angeordnet, welches aus dem Schüttbereich der Fördertrommel verfahrbar ist.

Durch die erfindungsgemässe Anordnung entsprechend Anspruch 7 wird ebenfalls mit einfachen Zusatzeinrichtungen eine Zwischenspeicherung ermöglicht, wobei die Vorwärmung und das Schmelzen in ein und demselben Ofengefäss erfolgen kann.

Gemäss Anspruch 8 ist der Zwischenspeicher mittels einer abgasführenden und gegen Wärmeverluste schützenden Haube abgedeckt, welche gasdicht an den Rauchgasstutzen des Lichtbogenofens an die untere Oeffnung der Fördertrommel und an die obere Kante des Zwischenspeichers anschliesst, wobei aber mechanische Bewegungen des Zwischenspeichers gegenüber dem Rauchgasstutzen und der oberen Kante des Zwischenspeichers ausführbar sind.

Nach Anspruch 9 besteht die Haube aus einer Tragkonstruktion deren den Abgasen des Lichtbogenofens zugewandten Teile mit einer Schutzschicht aus feuerfestem Material umgeben sind, und die Haube mittels Befestigungstraversen am Fundament befestigt ist.

Mit Hilfe der erfindungsgemässen Einrichtungen· entsprechend der Ansprüche 8 und 9 werden die Abgase gezielt geführt, und die Wärmeverluste werden auf ein Minimum reduziert.

Gemäss Anspruch 10 bestehen die Mittel zur Entleerung des Sammelgefässes aus wenigstens einem beweglichen Verschlusselement. Durch diese erfindungsgemässe Anordnung gemäss Anspruch 10 wird eine einfache Entleerung des Einsatzgutes und eine gleichmässige Verteilung des Einsatzgutes ein Ofengefäss erreicht.

Nach Anspruch 11 weist das bewegliche Verschlusselement des Sammelgefässes wenigstens eine rostartige Durchtrittsöffnung auf, an welche sich eine hohlzylindrische Durchtrittsöffnung im Trag- und Fahrschemel gasdicht anschliesst, welche ihrerseits mit der Eintrittsöffnung eines Gasabzugrohres gasdicht aber mechanisch beweglich verbunden ist.

Durch diese erfindungsgemässe Anordnung gemäss Anspruch 11 kann ein Teilstrom der Abgase des Lichtbogenofens gezielt durch das sich im Sammelgefäss befindliche Einsatzgut hindurchgeführt werden, wodurch das Einsatzgut weiter vorgewärmt wird und sich eine grosse Wärmehomogenität im Einsatzgut einstellt.

Entsprechend Anspruch 12 sind mindestens zwei Ofengefässe auf einer, um ihre vertikale Achse drehbaren Plattform angeordnet.

Gemäss Anspruch 13 ist ein erstes Ofengefäss mit einem Oberofen, im wesentlichen bestehend aus Ofendeckel, Deckelhebevorrichtung, Elektroden, Elektrodentragarme und Stellsäulen ausgerüstet, als Lichtbogenofen zum Schmelzen von Metallen dient und ein zweites Ofengefäss zum Vorwärmen des Einsatzmaterials vorgesehen ist, wobei beide Ofengefässe wechselweise im Verbund sowohl als Schmelz- als auch als Speicher bzw. Vorwärmöfen eingesetzt werden.

Mit Hilfe der erfindungsgemässen Einrichtung nach den Ansprüchen 12 und 13 kann ein einfacher Aufbau der Schmelz- und Vorwärmanlage realisiert werden.

Nach Anspruch 14 weisen zwei Ofengefässe je eine hydraulische Vorrichtung zum Kippen des Lichtbogenofens für das Entleeren des flüssigen Metalls und die zwei Ofengefässe stützen sich mit ihren Abwälzwiegen auf Wiegebalken ab, welche Wiegebalken auf der Plattform angeordnet sind.

Durch die erfindungsgemässe Anordnung entsprechend Anspruch 14 wird eine Entkopplung hinsichtlich der Kippbewegung von Schmelzgefäss und Zwischenspeicher erreicht. Aufwendige Konstruktionen für das Kippen der Plattform und beider Oefen entfallen somit.

Die Erfindung wird nachstehend anhand von in der Zeichnung dargestellten Ausführungsbeispiele näher erläutert :

In der Zeichnung zeigt :

Figur 1 eine schematische Vorderansicht in Schnittdarstellung einer beispielsweisen Ausführungsform einer kompletten Vorwärm- und Schmelzanlage ;

Figur 2 eine schematische Vorderansicht in teilweiser Schnittdarstellung einer Vorwärm- und Schmelzanlage gemäss Fig. 1 ;

Figur 3 eine schematische Vorderansicht in Schnittdarstellung einer weiteren beispielsweisen Ausführungsform einer Vorwärm- und Schmelzanlage ;

Figur 4 eine schematische Vorderansicht in teilweiser Schnittdarstellung einer weiteren beispielsweisen Ausführungsform.

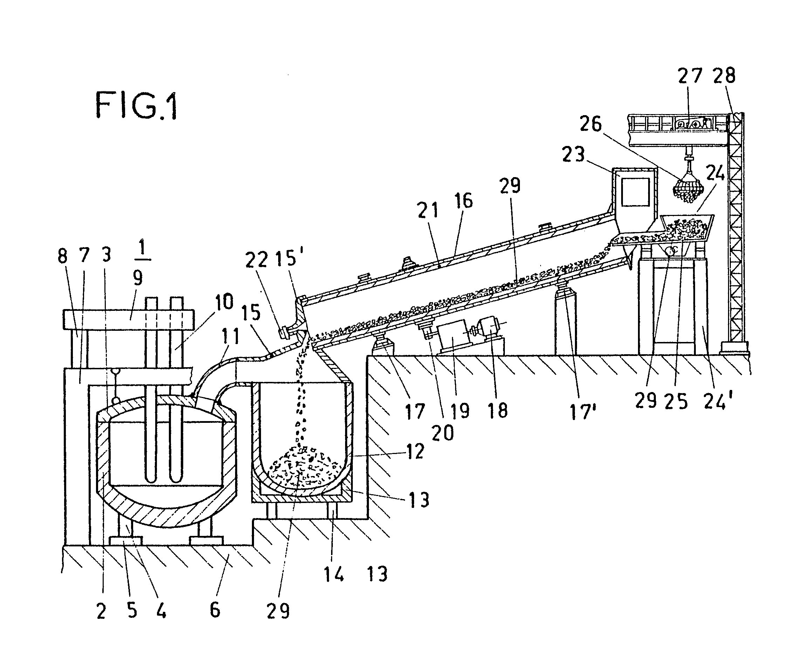

In Fig. 1 ist eine schematische Vorderansicht in Schnittdarstellung einer beispielsweisen Ausführungsform einer kompletten Vorwärm- und Schmelzanlage gezeigt.

Ein Lichtbogenofen 1, welcher ein Ofengefäss 2, einen Ofendeckel 3, eine Elektrodenstellsäule 8 mit Elektrodentragarm 9 und Elektroden 10 sowie die Deckelhebevorrichtung 7 umfasst, ist mit seinen Abwälzwiegen 4 auf Wiegebalken 5 abgestützt, welche am Fundament 6 befestigt sind.

Zwischen dem Lichtbogenofen 1 und der schräg angeordneten Fördertrommel 16 befindet sich ein Sammelgefäss 12, welches mit entsprechenden Rollen 14 zum Verfahren des Sammelgefässes 12 auf dem Fundament 6 ausgerüstet ist. Der Verfahrweg (in Richtung senkrecht zur Zeichenebene) beträgt etwas mehr als die Sammelgefässbreite.

Die Fördertrommel 16 wird mittels auf Fig. 1 nicht dargestellten Lagerringen in einem ersten 17 und einem zweiten 17' Lager gehalten und wird durch einen Elektromotor 18 angetrieben, wobei die Antriebskraft zunächst auf ein Uebersetzungsgetriebe 19 und schliesslich mittels eines Zahnrades 20 auf die Trommel 16 selbst übertragen wird. Die Trommel 16 ist mit einer feuerfesten Schutzschicht 21 ausgekleidet, um sie gegen thermische Einwirkungen zu schützen. Am oberen Ende der Trommel 16 befindet sich eine Aufgabevorrichtung 24 und die Schüttelrutsche 25 für das Einsatzgut 29. Die Aufgabevorrichtung 24 stützt sich an einer Tragkonstruktion 24' ab. Das Einsatzgut 29 wird mittels Lasthebemagnet 26 und Kran 27 herbeitransportiert. Der Kran 27 stützt sich mit seinem einen Ende auf den vertikalen Werkhallenträger 28 ab.

Die heissen Abgase aus dem Lichtbogenofen 1 gelangen durch einen Abgasstutzen 11 zunächst in das Sammelgefäss 12, welches mittels einer abgasführenden und gegen Wärmeverluste schützenden Haube 15 abgedeckt ist, und werden anschliessend der Fördertrommel 16 zugeführt. Die Haube 15 ist mit einer feuerfesten Auskleidung zum Schutz gegen thermische Einwirkungen und gegen Wärmeverluste versehen.

Durch eine sich einstellende Kaminwirkung, welche sich aus den unterschiedlichen Höhenniveaus von Lichtbogenofen 1 und dem oberen Ende der Trommel 16 ergibt, fallen die Abgase ausschliesslich am oberen Trommelende an und können über eine Auffanghaube 23 mit relativ niedriger Temperatur einem (in fig. 1 nicht dargestellten) Entstaubungssystem zugeführt werden.

Der kontinuierliche Transport des am oberen Trommelende aufgegebenen Einsatzgutes 29 erfolgt durch langsame Rotation der Trommel 16 um ihre Längsachse und in Gegenrichtung zur Abgasströmung.

Der Wärmeübergang auf das Einsatzgut 29 erfolgt durch Strahlung und Konvektion der heissen Abgase und durch Strahlung der feuerfesten Auskleidung 21 der Trommel 16. Die zugeführte Wärmemenge wird durch Verwendung eines zusätzlichen Brenners 22 noch verstärkt.

Am unteren Trommelende tritt das Einsatzgut 29 aus der Trommel 16 aus und wird in das Sammelgefäss 12 eingebracht. Hierbei kommt es während und auch nach der Schüttung in beständigem Kontakt mit den heissen Abgasen des Lichtbogenofens 1 und die Vorwärmung des Einsatzgutes 29 wird weiter fortgesetzt.

Nachdem das Sammelgefäss 12 nunmehr gefüllt ist, wird es um mindestens eine Sammelgefässbreite verfahren. Das Verfahren selbst kann durch geläufige Antriebsvorrichtungen, die in Fig. 1 nicht dargestellt sind, z. B. Seilzug geschehen.

Anschliessend wird der Ofendeckel 3 vom Ofengefäss 2 zwecks Beschickung des Lichtbogenofens 1 entfernt und das Sammelgefäss 12 mit dem vorgewärmten Einsatzgut 29 mit dem Kran 27 angehoben und verfahren und in den Lichtbogenofen in gleichmässiger Verteilung eingebracht und danach geschmolzen.

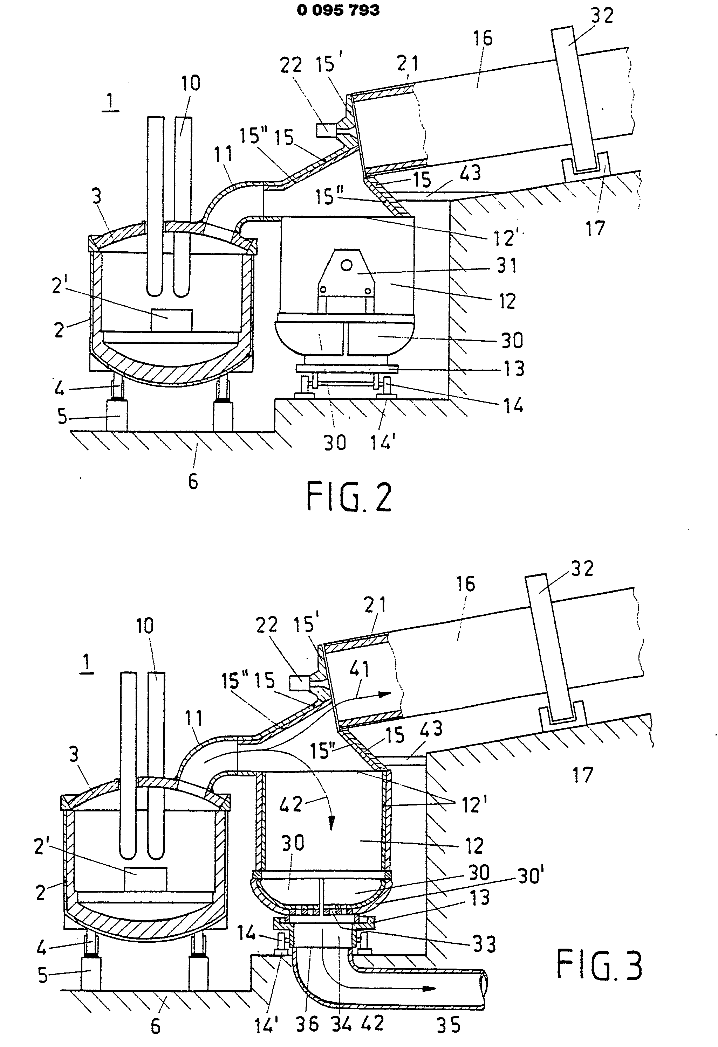

Die meisten Teile die bei Fig. 1 beschrieben wurden, sind ebenfalls in den nachfolgenden Fig. 2, 3 und 4 zu sehen. In den weiteren Figuren sind die Funktionsteile mit den gleichen Bezugsziffern wie in Fig. 1 bezeichnet.

Fig. 2 zeigt eine schematische Vorderansicht in teilweiser Schnittdarstellung einer Vorwärm- und Schmelzanlage.

In Fig. 2 ist gut die Haube 15 zu erkennen, welche praktisch gasdicht aber mechanisch beweglich an den Rauchgasstutzen 11 an das untere Ende der Fördertrommel 16 und an die obere Kante 12' des Sammelgefässes 12 anschliesst. Die Haube 15 ist mittels Befestigungstraversen 43 mit dem Fundament 6 befestigt.

In Fig. 2 ist ebenfalls der bereits in Fig. 1 angedeutete Lagerring 32 des ersten Lagers 17 der Fördertrommel 16 zu sehen.

Das Sammelgefäss 12 ruht auf einem Trag- und Fahrschemel 13, welcher mit entsprechenden Rollen bzw. Rädern 14 versehen ist. Diese rollen auf Schienen 14' ab, welche mit dem Fundament 6 verbunden sind, wodurch das Sammelgefäss 12 um annähernd eine Sammelgefässbreite verfahrbar ist.

Mit dem Befestigungsteil 31 kann das Sammelgefäss 12 angehoben und das vorgewärmte Einsatzgut 29 mittels an sich bekannter beweglicher Verschlusselemente 30 am Sammelgefäss 12 in das vorher freigelegte Ofengefäss 2 entleert werden. Hierdurch wird eine gleichmässige Verteilung des Einsatzgutes 29 im Ofengefäss 2 erreicht.

Fig. 3 zeigt eine beispielsweise Weiterbildung der Erfindung. Die beweglichen Verschlusselemente 30 des Sammelgefässes 12 weisen eine rostartige Durchtrittsöffnung 33 auf, an welche sich eine hohlzylindrische Durchtrittsöffnung 34 im Trag- und Fahrschemel 13 gasdicht anschliesst, welche ihrerseits mit der Eintrittsöffnung 36 eines Gasabzugrohres 35 gasdicht aber mechanisch beweglich verbunden ist.

Mit dieser erfindungsgemässen Anordnung wird ein erster Teilstrom der Abgase gemäss der Pfeilrichtung 41 durch die Fördertrommel 16 und ein zweiter Teilstrom gemäss der Pfeilrichtung 42 gezielt durch das Einsatzgut 29 im Sammelgefäss 12 geleitet. Dadurch wird das Einsatzgut 29 weiter vorgewärmt und vor allem stellt sich eine grössere Wärmehomogenität im Einsatzgut 29 ein. Diese ist vor allem dann von Bedeutung, wenn ein Einsatzgut 29 aus Komponenten mit stark variierender Stückgrösse verwendet wird.

Der erste Teilstrom 41 der Abgase wird durch eine sich selbständig einstellende Kaminwirkung erzielt. Der zweite Teilstrom 42 hingegen wird durch ein, in Fig. 3 nicht dargestelltes Gebläse erzeugt.

Das Gasabzugrohr 35 besteht aus einer zunderfreien Stahlqualität und die Notwendigkeit einer Auskleidung mit einem feuerfesten Material besteht deshalb nicht.

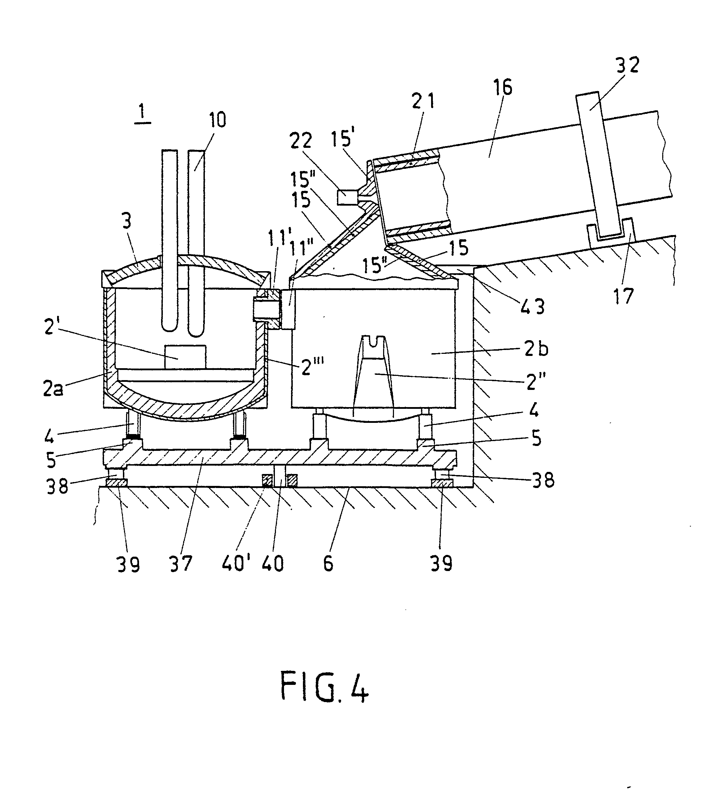

Gemäss Fig. 4 ist der Zwischenspeicher als ein weiteres Ofengefäss 26 ausgebildet. Sowohl das Ofengefäss 2b zum Schmelzen als auch das Vorwärmgefäss 2a sind auf einer gemeinsamen Plattform 37 angeordnet.

Beide Ofengefässe 2a, 2b sind identisch und können sowohl zum Vorwärmen als auch zum Schmelzen verwendet werden. Gleichzeitig kann man sich die in den Gefässwänden gespeicherte, vom Schmelzvorgang herrührende Wärme zur Vorwärmung zunutze machen.

Der Abgasübertritt vom Ofengefäss 2a zum Ofengefäss 2b erfolgt durch Rauchgasstutzen 11', 11", die beide gasdicht, aber mechanisch beweglich aneinander anschliessen.

Während das Einsatzgut 29 im Ofengefäss 2a geschmolzen wird, erfolgt die Vorwärmung des Einsatzgutes 29 im Ofengefäss 2b. Die für das Schmelzen notwendigen wesentlichen Funktionsteile sind in Fig. 1 eingehend beschrieben und deshalb aus Gründen besserer Uebersicht in Fig. 4 weggelassen worden.

Beide Ofengefässe 2a, 2b weisen je eine, in Fig. 4 nicht dargestellte hydraulische Vorrichtungen zum Kippen des Lichtbogenofens 1 für das Entleeren des flüssigen Metalls auf. Die beiden Ofengefässe 2a, 2b stützen sich mit ihren Abwälzwiegen 4 auf Wiegebalken 5 ab, welche auf der Plattform 37 angeordnet sind.

Die Funktionsteile des Oberofens, beispielsweise Elektrodenstellsäulen 8, Deckelhebevorrichtung 7 befinden sich auf einer von der Plattform 37 getrennten Plattform, welche gleichfalls gekippt werden kann.

Ist der Schmelzvorgang beendet, wird der flüssige Stahl aus dem Lichtbogenofen 1 mit dem Ofengefäss 2a entleert. Anschliessend wird der Ofendeckel 3 in bekannter Weise angehoben und die Plattform um 180° gedreht. Die Drehung erfolgt durch die üblichen, in Fig. 1 nicht dargestellten mechanischen Antriebe. Dabei rollen die Gleitrollen 38 auf den Gleitschienen 39 ab, wobei die Plattform 37 durch den axial angeordneten Zapfen 40 geführt ist, welche sich innerhalb des Zapfenlagers 40' bewegt. Die Gleitschienen 39 sind wiederum mit dem Fundament 6 verbunden.

Das Ofengefäss 2b mit dem vorgewärmten Einsatzgut 29 befindet sich nunmehr in der Schmelzposition 2a und das Ofengefäss 2a in der Vorwärmposition 2b.

Der Ofendeckel wird auf das Ofengefäss 2a abgesenkt, das Ofengefäss 2b befindet sich unter dem gasdichten Abschluss der Haube 15 und ein neuer Schmelz- und Vorwärmzyklus kann beginnen. In Fig. 4 sind noch die Giessschnauze 2" selbst dargestellt.

Selbstverständlich bleibt die Anwendung dieses Verfahrens nicht auf die in den Figuren dargestellten beispielsweisen Ausführungsformen beschränkt. So können mehrere Fördertrommeln 16 ein Sammelgefäss 12 oder ein Ofengefäss 2b beschikken. Andererseits ist es auch denkbar, dass nicht nur die Abgase eines Lichtbogenofens 1 einer Fördertrommel 16 zugeleitet werden, sondern dass mehrere Lichtbogenöfen 1 eine oder mehrere Fördertrommeln 16 mit heissen Abgasen versorgen.

Durch die erfindungsgemässe Anordnung können die Taktzeiten von einem oder mehreren Lichtbogenöfen 1 bezüglich Einschmelzen, Frischen, Feinen, Abgiessen und Stillstand denjenigen der Vorwärmung von einem oder mehreren Sammelgefässen 12 bzw. einem oder mehreren Ofengefäss(en) 2b angepasst werden. Daraus resultiert eine rationelle Arbeitsweise und eine Erhöhung der Produktionsleistung bei verminderter Arbeitsleistung des Ofenbedienungsperonals.

**Patentansprüche**

1. Verfahren zum Vorwärmen des Einsatzgutes (29) eines Lichtbogenofens (1), durch die Abgase des Lichtbogenofens (1), welche Abgase aus dem Inneren des Lichtbogenofens in eine zur waagrechten Ebene geneigte, um die eigene Achse drehende Fördertrommel (16) geleitet werden, wobei das Einsatzgut (29) in Gegenrichtung zum Abgasstrom durch die Fördertrommel (16) transportiert und erwärmt wird, dadurch gekennzeichnet, dass das Einsatzgut (29) nach dem Vorwärmen zuerst zwischengespeichert und erst danach geschmolzen wird.

2. Verfahren nach Anspruch 1, dadurch gekennzeichnet, dass das erwärmte Einsatzgut (29) in einem sammelgefäss (12) zwischengespeichert und danach in den Lichtbogenofen (1) chargiert wird.

3. Verfahren nach Anspruch 1, dadurch gekennzeichnet, dass das erwärmte Einsatzgut (29) in einem weiteren Ofengefäss (2b) zwischengespeichert und in diesem geschmolzen wird.

4. Verfahren nach den Ansprüchen 1 bis 3, dadurch gekennzeichnet, dass das zwischengespeicherte Einsatzgut (29) durch die Abgase des Lichtbogenofens (1) weiter erwärmt wird.

5. Verfahren nach einem der Ansprüche 2, 3 oder 4, dadurch gekennzeichnet, dass ein erster Teilstrom (41) der Abgase des Lichtbogenofens (1) durch die Fördertrommel (16) und ein zweiter Teilstrom (42) der Abgase des Lichtbogenofens (1) durch das bereits vorgewärmte Einsatzgut (29) geleitet werden.

6. Lichtbogenofenanlage zur Durchführung des Verfahrens nach Anspruch 1, im wesentlichen umfassend Ofengefäss (2), Ofendeckel (3), Deckelhebevorrichtung (7), Elektroden (10), Elektrodentragarm (9), Elektrodenstellsäulen (8) sowie Fördertrommel (16), wobei Mittel zur Führung mindestens eines Teils der heißen Abgase des Lichtbogenofens über einen Abgasstutzen (11) in die Fördertrommel (16) vorgesehen sind, dadurch gekennzeichnet, dass ein als Sammelgefäss (12) ausgeführter Zwischenspeicher zwischen dem Lichtbogenofen (1) und der Fördertrommel (16) angeordnet ist und auf einem Trag- und Fahrschemel (13) ruht, welcher mit entsprechenden Rollen bzw. Rädern (14) versehen ist, die auf Schienen (14) abrollen und um annähernd eine Sammelgefässbreite verfahrbar ist und Mittel zur Entleerung des Sammelgefässes (12) in das Ofengefäss (2) vorgesehen sind.

7. Lichtbogenofenanlage zur Durchführung des Verfahrens nach Anspruch 1, im wesentlichen umfassend Ofengefäss (2), Ofendeckel (3), Deckelhebevorrichtung (7), Elektroden (10), Elektrodentragarme (9), Elektrodenstellsäulen (8) sowie Fördertrommel (16), dadurch gekennzeichnet, dass als Zwischenspeicher zwischen dem Lichtbogenofen (1) und der Fördertrommel ein weiteres Ofengefäss angeordnet ist, welches aus dem Schüttbereich der Fördertrommel (16) verfahrbar ist.

8. Lichtbogenofenanlage nach einen der Ansprüche 6 und 7, dadurch gekennzeichnet, dass der Zwischenspeicher mittels einer abgasführenden und gegen Wärmeverluste schützenden Haube (15) abgedeckt ist, welche gasdicht an den Rauchgasstutzen (11, 11') des Lichtbogenofens (1), an die untere Oeffnung der Fördertrommel (16) und an die obere Kante (12') des Zwischenspeichers (12, 2b) anschliesst, wobei aber mechanische Bewegungen des Zwischenspeichers (12, 2b) gegenüber dem Rauchgasstutzen (11, 11') und der oberen Kante (12') des Zwischenspeichers (12, 2b) ausführbar sind.

9. Lichtbogenofenanlage nach Anspruch 8, dadurch gekennzeichnet, dass die Haube (15) aus einer Tragkonstruktion besteht, deren, den Abgasen des Lichtbogenofens (1) zugewandten Teile mit einer Schutzschicht (15) aus feuerfestem Material umgeben sind, und die Haube (15) mittels Befestigungstraversen (43) mit dem Fundament (6) befestigt ist.

10. Lichtbogenofenanlage nach Anspruch 6, dadurch gekennzeichnet, dass die Mittel zur Entleerung des sammelgefässes (12) aus wenigstens einem beweglichen Verschlusselement (30) bestehen.

11. Lichtbogenofenanlage nach Anspruch 6 und 10, dadurch gekennzeichnet, dass das bewegliche Verschlusselement (30) des Sammelgefässes (12) wenigstens eine rostartige Durchtrittsöffnung (33) aufweist, an welche sich eine hohlzylindrische Durchtrittsöffnung (34) im Trag- und Fahrschemel (13) gasdicht anschliesst, welche ihrerseits mit der Eintrittsöffnung (35') eines Gasabzugrohres (35) gasdicht aber mechanisch beweglich, verbunden ist.

12. Lichtbogenofenanlage nach Anspruch 7, dadurch gekennzeichnet, dass mindestens zwei Ofengefässe (2a, 2b) auf einer, um ihre vertikale Achse drehbaren Plattform (37) angeordnet sind.

13. Lichtbogenofenanlage nach Anspruch 12, dadurch gekennzeichnet, dass ein erstes Ofengefäss (20) mit einem Oberofen, im wesentlichen bestehend aus Ofendeckel (3), Deckelhebevorrichtung (7), Elektroden (10), Elektrodentragarme (9) und Stellsäulen (8) ausgerüstet, als Lichtbogenofen (1) zum Schmelzen von Metallen dient und ein zweites Ofengefäss (2b) zum Vorwärmen des Einsatzmaterials (29) vorgesehen ist, wobei beide Ofengefässe (2a, 2b) wechselweise im Verbund sowohl als Schmelzgefäss als auch als Zwischenspeicher eingesetzt werden.

14. Lichtbogenofenanlage nach Anspruch 13, dadurch gekennzeichnet, dass die zwei Ofengefässe (2a, 2b) je eine hydraulische Vorrichtung zum Kippen des Lichtbogenofens (1) für das Entleeren des flüssigen Metalls aufweisen und die zwei Ofengefässe (2a, 2b) sich mit ihren Abwälzwiegen (4) auf Wiegebalken (5) abstützen, welche Wiegebalken (4) auf der Plattform (37) angeordnet sind.

## Claims

1. Process for preheating the charge (29) of an arc furnace (1) by means of the exhaust gases from the arc furnace (1), which exhaust gases are fed from the interior of the arc furnace into a conveyor barrel (16) which is inclined to the horizontal plane and rotates about its own axis, with the charge (29) being transported through the conveyor barrel (16) in the opposite direction to the exhaust gas current and being heated up, characterised in that the charge (29) is first temporarily stored after being preheated and is only melted subsequently.

2. Process according to Claim 1, characterised in that the heated charge (29) is temporarily stored in a collecting chamber (12) and subsequently fed into the arc furnace (1).

3. Process according to Claim 1, characterised in that the heated charge (29) is temporarily stored in a further furnace chamber (2b) and is melted in the latter.

4. Process according to Claims 1 to 3, characterised in that the temporarily stored charge (29) is heated up further by the exhaust gases of the arc furnace (1).

5. Process according to one of Claims 2, 3 or 4, characterised in that a first partial current (41) of the exhaust gases of the arc furnace (1) is passed through the conveyor barrel (16) and a second partial current (42) of the exhaust gases of the arc furnace (1) is passed through the already preheated charge (29).

6. Arc furnace plant for carrying out the process according to Claim 1, essentially comprising furnace chamber (2), furnace cover (3), cover lifting device (7), electrodes (10), electrode support arm (9), electrode positioning pillars (8) and also conveyor barrel (16), with means being provided for passing at least one part of the hot exhaust gases of the arc furnace through an exhaust gas flue (11) into the conveyor barrel (16), characterised in that a temporary container designed as a collecting chamber (12) is disposed between the arc furnace (1) and the conveyor barrel (16) and rests on a support and transport carriage (13), which is provided with suitable rollers or wheels (14) which run on rails (14') and can be moved through a distance approximately equal to the width of the collecting chamber, and means are provided for emptying the collecting chamber (12) into the furnace chamber (2).

7. Arc furnace plant for carrying out the process according to Claim 1, essentially comprising furnace chamber (2), furnace cover (3), cover lifting device (7), electrodes (10), electrode support arms (9), electrode positioning pillars (8) and also conveyor barrel (16), characterised in that between the arc furnace (1) and the conveyor barrel there is disposed a further furnace chamber as a temporary container wich can be moved out of the dumping radius of the conveyor barrel (16).

8. Arc furnace plant according to either of Claims 6 and 7, characterised in that the temporary container is sealed by a hood which conveys exhaust gases and is protected against heat loss, which hood connects in a gastight manner to the waste-gas flue (11, 11') of the arc furnace (1) to the lower outlet of the conveyor barrel (16) and to the upper rim (12') of the temporary container (12, 2b), with it being possible, however, to perform mechanical movements of the temporary container (12, 2b) with respect to the waste-gas flue (11, 11') and the upper rim (12') of the temporary container (12, 2b).

9. Arc furnace plant according to Claim 8, characterised in that the hood (15) consists of a supporting structure, with the parts of it which are directed towards the exhaust gases of the arc furnace (1) being surrounded by a protective layer (15') of refractory material, and that the hood (15) is secured by means of cross ties (43) to the foundation (6).

10. Arc furnace plant according to Claim 6, characterised in that the means for emptying the collecting chamber (12) consist of at least one movable closure element (30).

11. Arc furnace plant according to Claims 6 and 10, characterised in that the movable closure element (30) of the collecting chamber (12) incorporates at least one grating-type connecting port (33) to which a hollow cylindrical connecting port (34) in the support and transport carriage (13) adjoins in a gas-tight manner, which connecting port in turn is connected in a gas-tight but mechanically movable manner to the inlet port (35') of a gas extraction duct (35).

12. Arc furnace plant according to Claim 7, characterised in that at least two furnace chambers (2a, 2b) are disposed on a platform (37) which can be rotated about its vertical axis.

13. Arc furnace plant according to Claim 12, characterised in that a first furnace chamber (2a) equipped with an upper furnace, essentially consisting of a furnace cover (3), a cover lifting device (7), electrodes (10), electrode support arms (9) and positioning pillars (8), acts as an arc furnace (1) for melting metals and a second furnace chamber (2b) is provided for preheating the charging material (29), with both furnace chambers (2a, 2b) being used alternatively in combination both as melting chamber and temporary container.

14. Arc furnace plant according to Claim 13, characterised in that the two furnace chambers (2a, 2b) each incorporate a hydraulic device for tipping the arc furnace (1) to discharge the liquid metal and the two furnace chambers (2a, 2b) are supported by means of their tilting cradles (4) on cradle beams (5), which cradle beams (5) are disposed on the platform (37).

## Revendications

1. Procédé pour le préchauffage de la charge (29) d'un four à arc (1), au moyen des gaz d'échappement du four à arc (1), lesquels gaz sont conduits depuis l'intérieur du four à arc dans un tambour d'alimentation (16) incliné par rapport à un plan horizontal et tournant autour de son propre axe, la dite charge (29) étant transportée et échauffée, à travers le tambour d'alimentation, à contre-courant par rapport au courant de gaz d'échappement, caractérisé en ce que l'on réalise une accumulation intermédiaire de la charge (29) après son préchauffage et que seulement ensuite on en opère la fusion.

2. Procédé suivant la revendication 1, caractérisé en ce que la charge (29) préchauffée est accumulée dans un récipient collecteur (12) et en ce qu'elle est ensuite enfournée dans le four à arc (1).

3. Procédé suivant la revendication 1, caractérisé en ce que la charge (29) préchauffée est accumulée dans une cuve de four (2b) supplémentaire et qu'elle y est fondue.

4. Procédé suivant l'une des revendications 1 à 3, caractérisé en ce que la charge (29) accumulée est soumise à un chauffage supplémentaire au moyen des gaz d'échappement du four à arc (1).

5. Procédé suivant l'une des revendications 2, 3 ou 4, caractérisé en ce qu'un premier courant partiel (41) de gaz d'échappement du four à arc (1) est conduit à travers le tambour d'alimentation (16) et en ce qu'un second courant partiel (42) de gaz d'échappement du four à arc (1) est conduit à travers la charge (29) déjà préchauffée.

6. Installation de four à arc pour la mise en œuvre du procédé suivant la revendication 1, comprenant essentiellement une cuve de four (2), un couvercle de four (3), un dispositif (7) de levage du couvercle, des électrodes (10), un bras porte-électrodes (9), des colonnes (8) de réglage des électrodes ainsi qu'un tambour d'alimentation (16), des moyens étant prévus pour envoyer au moins une partie des gaz d'échappement chauds du four à arc dans le tambour d'alimentation (16) à travers un conduit à fumées (11), caractérisée en ce qu'un accumulateur intermédiaire constituant un récipient collecteur (12) est disposé entre le four à arc (1) et le tambour d'alimentation (16) et s'appuie sur un piètement (13) porteur et mobile, qui est pourvu de galets respectivement de roues correspondantes (14) qui roulent sur des rails et qui est déplaçable sur une distance approximativement égale à une largeur du récipient collecteur, et en ce qu'il est prévu des moyens pour vider le récipient collecteur (12) dans la cuve de four (2).

7. Installation de four à arc pour la mise en œuvre du procédé suivant la revendication 1, comprenant essentiellement une cuve de four (2), un couvercle de four (3), un dispositif (7) de levage du couvercle, des électrodes (10), des bras porte-électrodes (9), des colonnes (8) de réglage des électrodes ainsi qu'un tambour d'alimentation (16), caractérisée en ce que, comme accumulateur intermédiaire est disposée entre le four à arc (1) et le tambour d'alimentation une cuve de four supplémentaire qui est déplaçable hors de la portée de déversement du tambour d'alimentation (16).

8. Installation de four à arc suivant l'une des revendications 6 et 7, caractérisée en ce que l'accumulateur intermédiaire est couvert par une hotte (15) conduisant les gaz d'échappement et protégeant contre les pertes thermiques, qui se raccorde de façon étanche aux gaz au conduit à fumées (11, 11') du four à arc (1), à l'orifice inférieur du tambour d'alimentation (16) et au bord supérieur (12') de l'accumulateur intermédiaire (12, 2b), les mouvements mécaniques de l'accumulateur intermédiaire (12, 2b) par rapport au conduit à fumées (11, 11') et au bord supérieur de l'accumulateur intermédiaire (12, 2b) pouvant cependant être effectués.

9. Installation de four à arc suivant la revendication 8, caractérisée en ce que la hotte (15) se compose d'une structure portante dont les parties exposées aux gaz d'échappement du four à arc (1) sont entourées d'une couche de protection (15'') en matériau réfractaire, et en ce que la hotte (15) est fixée à la fondation (6) au moyen de traverses de fixation (43).

10. Installation de four à arc suivant la revendication 6, caractérisée en ce que les moyens de vidange du récipient collecteur (12) consistent en au moins un organe de fermeture mobile (30).

11. Installation de four à arc suivant la revendication 6 et 10, caractérisée en ce que l'organe de fermeture mobile (30) du récipient collecteur (12) présente au moins une ouverture de passage (33) en forme de grille, à laquelle se raccorde de façon étanche aux gaz une ouverture de passage cylindrique (34) ménagée dans le piètement porteur mobile (13), ouverture qui, à son tour, communique de façon étanche aux gaz mais mécaniquement mobile, avec l'ouverture d'entrée (35') d'un tuyau (35) d'aspiration des gaz.

12. Installation de four à arc suivant la revendication 7, caractérisée en ce qu'au moins deux cuves de four (2a, 2b) sont montées sur une plateforme (37) pouvant tourner autour de son axe vertical.

13. Installation de four à arc suivant la revendication 12, caractérisée en ce qu'une première cuve de four (2a) est équipée d'une tête de four composée essentiellement d'un couvercle de four (3), d'un dispositif (7) de levage du couvercle, d'électrodes (10), de bras porte-électrodes (9) et de colonnes (8) de réglage des électrodes et sert de four à arc (1) pour la fusion des métaux, et en ce qu'une deuxième cuve de four (2b) est prévue pour le préchauffage de la charge (29), les deux cuves de four (2a, 2b) étant utilisées alternativement en association aussi bien comme four de fusion que comme accumulateur intermédiaire.

14. Installation de four à arc suivant la revendication 13, caractérisée en ce que chacune des deux cuves de four (2a, 2b) présente un équipement hydraulique de basculement du four à arc (1) pour le versage du métal liquide et en ce que les deux cuves de four (2a, 2b) prennent appui par leurs bascules roulantes (4) sur des poutres de pesage (5) qui sont montées sur la plateforme (37).

FIG.1

FIG. 2

FIG. 3

FIG. 4